(19) **Europäisches Patentamt / European Patent Office / Office européen des brevets**

(11) **EP 4 692 023 A1**

(12) **EUROPEAN PATENT APPLICATION**
published in accordance with Art. 153(4) EPC

(43) Date of publication:
**11.02.2026 Bulletin 2026/07**

(21) Application number: **24800275.0**

(22) Date of filing: **03.05.2024**

(51) International Patent Classification (IPC):
**C04B 35/48** (2006.01)   **C04B 35/64** (2006.01)
**C04B 35/626** (2006.01)   **H01M 10/0562** (2010.01)
**H01M 10/052** (2010.01)

(52) Cooperative Patent Classification (CPC):
**Y02E 60/10**

(86) International application number:
**PCT/KR2024/006047**

(87) International publication number:
**WO 2024/228594 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.05.2023  KR 20230058016**

(71) Applicants:
• **SK On Co., Ltd.**
  **Seoul 03161 (KR)**
• **Dankook University Cheonan Campus Industry Academic Corporation Foundation Cheonan-si, Chungcheongnam-do 31116 (KR)**

(72) Inventors:
• **PARK, Ji-Young**
  **Daejeon 34124 (KR)**
• **HEO, Pil-Won**
  **Daejeon 34124 (KR)**
• **NASIR, Mohammad**
  **Cheonan-si Chungcheongnam-do 31116 (KR)**
• **PARK, Hee-Jung**
  **Cheonan-si Chungcheongnam-do 31116 (KR)**

(74) Representative: **Prüfer & Partner mbB**
**Patentanwälte · Rechtsanwälte**
**Sohnckestraße 12**
**81479 München (DE)**

(54) **CERAMIC SHEET, METHOD FOR PREPARING SAME, AND ALL-SOLID SECONDARY BATTERY COMPRISING SAME**

(57)    The present disclosure provides a ceramic sheet, a method for preparing same, and an all-solid secondary battery comprising same. According to the present disclosure, provided is a garnet-type oxide-based ceramic sheet that contains a garnet-type oxide and comprises a surface layer and a deep layer, wherein the average lithium content in garnet-type oxide particles in the surface layer is greater than the average lithium content in garnet-type oxide particles in the deep layer, and the ratio of the average lithium content in the garnet-type oxide in the surface layer to the average lithium content in the garnet-type oxide in the deep layer is greater than 1 and less than 1.014.

[FIG. 3]

## Description

Technical Field

The present disclosure relates to a ceramic sheet, a method for preparing the same, and an all-solid secondary battery comprising the same.

Background Art

Lithium secondary batteries boast high electrochemical capacity, high operating potential, and excellent charge/discharge cycle characteristics, and demand therefor is steadily increasing as an energy source for portable information terminals, portable electronic devices, small household power storage devices, motorcycles, electric vehicles, and hybrid electric vehicles. This expansion in lithium secondary battery applications is also driving the need for improved safety and higher performance of the lithium secondary battery.

Conventional lithium secondary batteries use highly flammable liquid electrolytes, which may lead to serious safety issues in the event of a short circuit, and specifically, the electrolytes are prone to ignition when exposed to water in the air. These safety issues are becoming increasingly important in electric vehicles.

Recently, research into all-solid secondary battery (SSD) using solid electrolytes formed of non-flammable inorganic materials has been actively pursued to improve safety. All-solid secondary batteries offer numerous advantages, including safety, high energy density, high output, long lifespan, simplified manufacturing processes, larger/compacterized batteries, and lower costs, and these advantages are attracting attention as next-generation secondary batteries.

Disclosure of Invention

Technical Problem

The present disclosure provides a garnet-type oxide-based on ceramic sheet having excellent atmospheric stability.

The present disclosure provides a method for preparing the garnet-type oxide-based ceramic sheet.

Furthermore, the present disclosure provides an all-solid battery comprising the garnet-type oxide-based ceramic sheet. Solution to Problem

The present disclosure provides a garnet-type oxide-based ceramic sheet, and according to an embodiment, provided is a garnet-type oxide-based ceramic sheet comprising a garnet-type oxide, wherein the garnet-type oxide-based ceramic sheet includes a surface layer and a deep layer, an average lithium content of garnet-type oxide particles in the surface layer is greater than an average lithium content of garnet-type oxide particles in the deep layer, and a ratio of the average lithium content of the garnet-type oxide particles in the surface layer to the average lithium content of the garnet-type oxide particles in the deep layer is greater than 1 and less than 1.014.

The surface layer may be a region from one surface of the ceramic sheet to a thickness of 1 $\mu$m, and the deep layer may be a region from the thickness of 1 $\mu$m to a thickness center.

In the average lithium content of the garnet-type oxide of the surface layer, a stoichiometric ratio of lithium may be less than 6.33, based on when oxygen content is 12 in a compositional formula of the garnet-type oxide particles.

The garnet-type oxide may include an LLZO-based oxide.

The LLZO-based oxide may include a doping element.

The LLZO-based oxide may include at least one doping element selected from the group consisting of Ga and Al at an Li site.

The ceramic sheet may have a lithium ion conductivity of 1.3 mS/cm or more at 25°C.

The ceramic sheet may have an electronic conductivity of 10 x 10$^{-10}$ cm or less.

The ceramic sheet may have grain boundaries and an average grain size of 4 to 200 $\mu$m.

The garnet-type oxide powder particles may have an average particle size of 1 $\mu$m or less and may have two or more particle sizes.

The garnet-type oxide powder particles may have a $D_{10}$ of 1 $\mu$m or less and a $D_{50}$ of 1 $\mu$m to 30 $\mu$m.

Additionally, the present disclosure provides a method for preparing a garnet-type oxide-based ceramic sheet as an aspect, and according to an embodiment, provided is a method for preparing a garnet-type oxide-based ceramic sheet, comprising: preparing an oxide molded body by molding garnet-type oxide powder particles having an average particle size of 1 $\mu$m or less and two or more particle sizes into a predetermined shape; and producing a sintered body by sintering the oxide molded body, and the sintering includes a first sintering and a second sintering, and a first sintering temperature may be higher than a second sintering temperature.

The first sintering temperature may be 1050 to 1400°C, and the second sintering temperature may be 1000 to 1300°C.

The method of an embodiment according to the present disclosure further may include: preparing a calcined garnet-type oxide powder particles by calcining precursor powder particles; and pulverizing the calcined garnet-type oxide powder particles to provide garnet-type oxide powder particles having two or more particle sizes.

The calcined garnet-type oxide powder particles may have a $D_{10}$ of 1 $\mu$m or less and a $D_{50}$ of 1 $\mu$m to 30 $\mu$m.

The garnet-type oxide may include an LLZO-based oxide.

The present disclosure provides an all-solid secondary battery as an aspect, and according to an embodiment, provided is an all-solid secondary battery comprising an anode, a cathode, and a solid electrolyte, and the solid electrolyte may be the ceramic sheet described above.

Advantageous Effects of Invention

A ceramic sheet comprising a garnet-type oxide according to the present disclosure has a controlled lithium concentration on a surface thereof, which reduces the formation of impurity phases due to atmospheric moisture or carbon dioxide, resulting in excellent atmospheric stability.

An all-solid battery comprising a ceramic sheet comprising a garnet-type oxide according to the present disclosure as an electrolyte sheet may suppress the formation of impurity phases between an electrode and an electrolyte sheet, thereby suppressing the reduction in ionic conductivity.

A solid electrolyte of the present disclosure may be widely applied to electric vehicles, battery charging stations, and devices within green technology fields such as solar and wind power generation using other batteries. Furthermore, the solid electrolyte of the present disclosure may be used in eco-friendly electric vehicles, hybrid vehicles, and other vehicles that contribute to preventing climate change by suppressing air pollution and greenhouse gas emissions.

Brief Description of Drawings

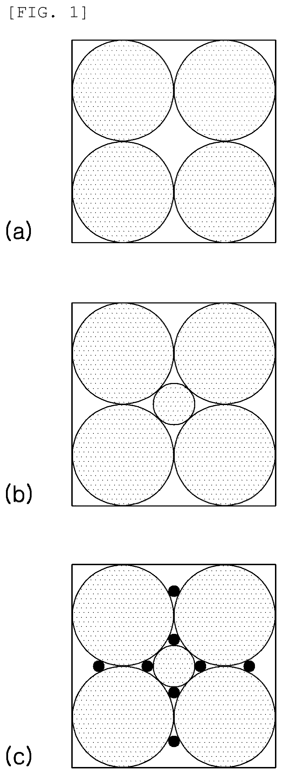

FIG. 1 is a schematic diagram illustrating an effect of particle size distribution characteristics on the densification of a sintered body, and (a) of FIG. 1 illustrates the use of single-size powder particles, (b) of FIG. 1 illustrates the use of powder particles having a bimodal particle size distribution, and (c) of FIG. 1 illustrates the use of powder particles having a trimodal particle size distribution.

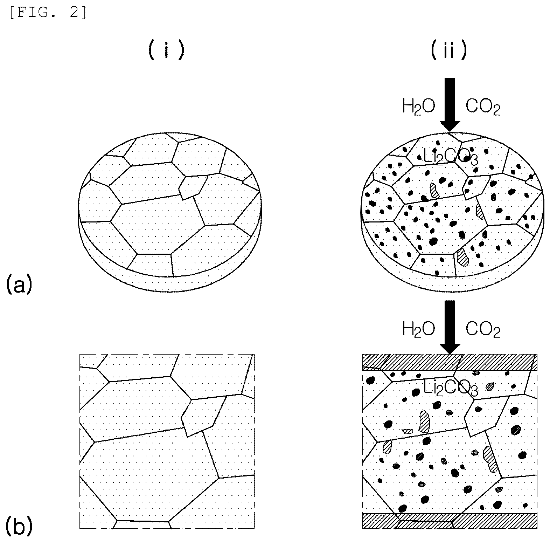

FIG. 2 is a view schematically illustrating a crystal shape of a sintered body prepared by one-operation sintering, which involves sintering at high temperatures for a long period of time, and a reaction occurring when the sintered body is exposed to air, and (a) of FIG. 2 illustrates the crystal shape (i) of the sintered body surface and a surface change (ii) resulting from the reaction, and (b) of FIG. 2 illustrates a crystal shape (i) of a sintered body cross-section and a surface change (ii) resulting from the reaction.

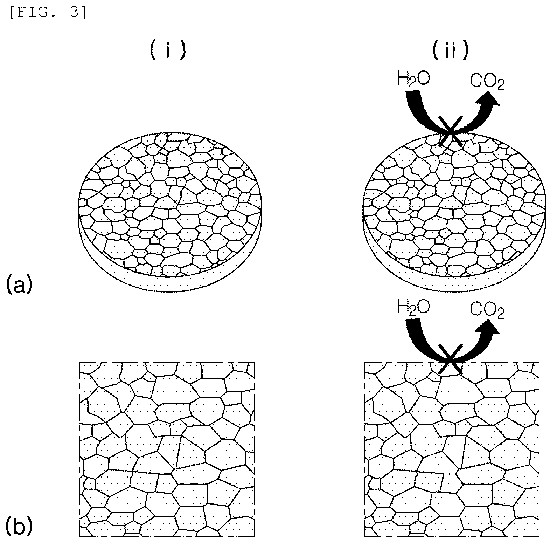

FIG. 3 is a schematic diagram illustrating a crystal shape of a sintered body prepared through two-operation sintering of performing sintering at high temperature for a short time and sintering at low temperature for a long time and a reaction occurring when the sintered body is exposed to air, and (a) of FIG. 3 illustrates a crystal shape (i) of the sintered body surface and a surface change (ii) resulting from the reaction, and (b) of FIG. 3 illustrates a crystal shape (i) of a sintered body cross-section and a surface change (ii) resulting from the reaction.

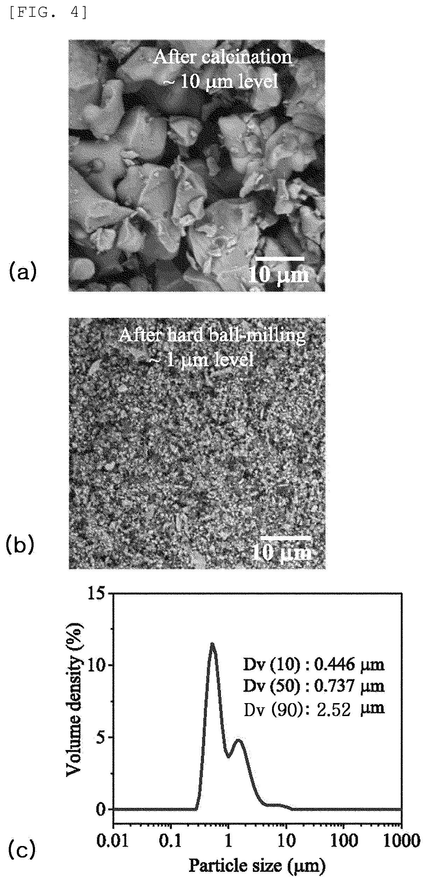

(a) of FIG. 4 is an SEM image of GLLZO powder particles manufactured in Reference Example 1, (b) of FIG. 4 is an SEM image of GLLZO powder particles after particle size control by ball milling, and (c) of FIG. 4 is a graph illustrating particle size analysis results of particle size-controlled GLLZO powder particles of the (b).

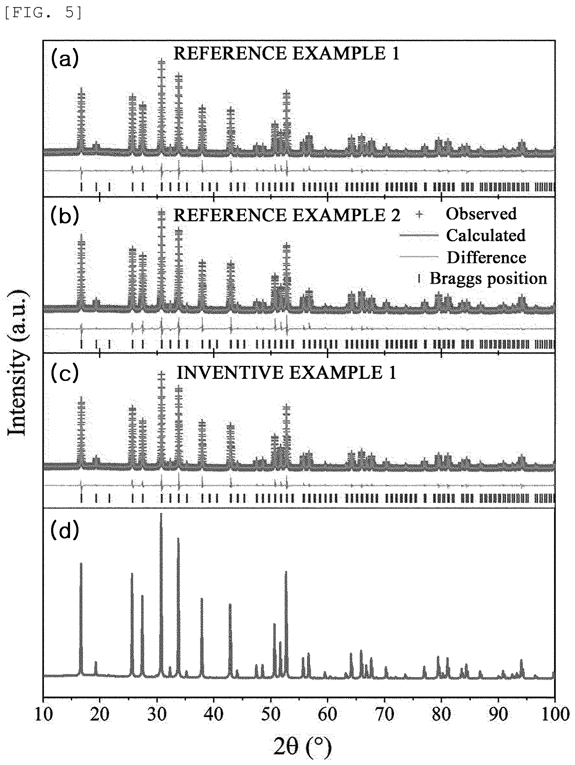

(a) to (c) of FIG. 5 illustrate Rietveld fitting results based on XRD analysis of a ceramic sheet prepared in Reference Examples 1 and 2 and Inventive Example 1, and (d) of FIG. 5 illustrates XRD analysis results of a GLLZO ceramic sheet.

FIG. 6 illustrates an SEM image obtained by capturing surfaces of ceramic sheets prepared in Reference Examples 1 and 2, and Inventive Example 1.

FIG. 7 illustrates two-probe AC impedance patterns of ceramic sheets prepared in Reference Examples 1 and 2, and Inventive Example 1.

FIG. 8 is a view illustrating lithium ion conductivities of ceramic sheets prepared in Reference Examples 1 and 2, and Inventive Example 1, along with known lithium ion conductivity values for LLZO including doping elements.

FIG. 9 is a view illustrating temperature-dependent resistance measurements and temperature-dependent ionic conductivity analysis of ceramic sheets prepared in Reference Examples 1 and 2, and Inventive Example 1.

FIG. 10 is a view illustrating the results of a DC polarization test on ceramic sheets prepared in Reference Examples 1 and 2, and Inventive Example 1.

FIG. 11 is a scanning electron microscope (SEM) image of surfaces of ceramic sheets (a) prepared in Reference Examples 1 and 2, and Inventive Example 1, a ceramic sheet (b) obtained by aging each of the ceramic sheets (a) in a desiccator, and a ceramic sheet (c) obtained by aging each of the ceramic sheets (a) in air.

FIG. 12 is a view illustrating a complex impedance spectrum and a change in lithium ion conductivity at 25°C for ceramic sheets (a) to (c) of Reference Examples 1 and 2, and Inventive Example 1, respectively.

FIG. 13 is a view illustrating $Li_2CO_3$/LLZO peak ratios for ceramic sheets (a) to (c) of Reference Examples 1 and 2, and Inventive Example 1, respectively.

FIG. 14 is a graph illustrating results of secondary ion mass spectrometry (SIMS) analysis of lithium strength to confirm a difference in $Li_2CO_3$ production between the ceramic sheets prepared in Reference Examples 1 and 2, and Inventive Example 1. Best Mode for the Invention

An all-solid secondary battery is comprised of a cathode, a solid electrolyte layer, and an anode. The solid electrolyte in the solid electrolyte layer thereamong requires high ionic conductivity and low electronic conductivity. The all-solid secondary battery typically exhibits poor interfacial compatibility between the solid electrolyte layer and the electrode, as well as low ionic conductivity.

For example, a garnet-type oxide such as $Li_7La_3Zr_2O_{12}$ (Li-La-Zr-O, LLZO) are attracting significant attention as solid electrolytes for all-solid batteries due to relatively excellent lithium ion conductivity (>0.1 mS/cm), wide electrochemical stability window (>4.5 V), and excellent stability against Li metal anodes.

However, despite the above-described high potential, the garnet-type oxide solid electrolyte is required to achieve a lithium ion conductivity (total conductivity (including grain and grain boundary components)) of 1 mS/cm or higher at room temperature (25°C).

Lithium ion conductivity may be affected by factors such as sample density, a crystal structure, sample stoichiometry, concentration of mobile lithium ions, lithium ion vacancies, or lithium ion mobility. At least pure LLZO, i.e., undoped LLZO, generally crystallizes in a tetragonal structure and has low ionic conductivity. Furthermore, high ionic conductivity at 25°C is required.

The present disclosure provides a garnet-type oxide-based ceramic sheet having excellent atmospheric stability, a method for preparing the ceramic sheet, and an all-solid battery including the ceramic sheet as a solid electrolyte.

The method for preparing a garnet-type oxide-based ceramic sheet according to the present disclosure includes: preparing an oxide-type molded body by utilizing and molding garnet-type oxide powder particles into a predetermined shape; and producing a sintered body sintering the molded body.

The method for preparing a garnet-type oxide-based ceramic sheet according to the present disclosure includes: producing a molded body by molding garnet-type oxide powder particles into a predetermined shape.

The garnet-type oxide powder particles are an ion conductor having a garnet structure, for example, a cubic or orthorhombic crystal structure, and may be lithium lanthanum zirconium oxide (LLZO) represented by the chemical formula $Li_{7-x}La_3Zr_{2-x}Ta_xO_{12}$ (where $0 \leq x \leq 2$). Specifically, the garnet-type oxide powder particles may be a solid ion conductor having, for example, a stoichiometric composition of $Li_7La_3Zr_2O_{12}$.

Oxide-type Lithium ion conductivity may be improved by introducing doping elements into a solid electrolyte. Specifically, different doping elements may be doped into the La, Zr, and Li sites.

For example, the garnet-type oxide powder particles may include a doping element at the Li site. The doping element may be included at the Li site of the garnet-type oxide powder particles, so that a lithium content may be reduced or the concentration of lithium vacancies may be increased, thereby stabilizing the crystal structure and improving ion conductivity.

The doping elements may be included at the La and Zr sites. The La and Zr sites with doping elements may be doped and crystallized into a cubic shape, thereby improving ion conductivity.

The doping element at the Li site is not limited thereto, but may include, for example, any one selected from the group consisting of Ga, Al, In, Sc, Fe and Y, and also, two or more doping elements may be simultaneously included. More specifically, the doping element at the Li site may be at least one selected from the group consisting of Ga and Al. Accordingly, garnet-type oxide powder particles including doping elements at the Li site may be represented, for example, by the chemical formulas $Li_{7-3x}Ga_xLa_3Zr_2O_{12}$ or $Li_{7-3x}Al_xLa_3Zr_2O_{12}$ ($0 < x \leq 0.25$).

Meanwhile, garnet-type oxide powder particles such as LLZO may be readily generated form $Li_2CO_3$ on surfaces thereof due to reactions with moisture ($H_2O$) and carbon dioxide ($CO_2$), leading to rapid decomposition in air. This $Li_2CO_3$, which is formed by the ion exchange of $Li^+$ and $H^+$, may be primarily formed at boundaries between particles within the sintered body, and may lead to the growth of secondary phases such as $La_2Zr_2O_7$. $Li_2CO_3$ formed at boundaries between the particles may significantly degrade battery performance by increasing impedance. The solid electrolyte may provide air stability by including doping elements at the Li site. To this end, the garnet-type oxide powder particles may include doping elements such as Mg and Ga.

The garnet-type oxide powder particles may also include additional doping elements at the La and/or Zr sites.

The doping element may be included at the La site, thus stabilizing a crystal lattice of the garnet-type oxide powder particles. The doping element included in the La site may be, but is not limited to, for example, an alkaline earth metal, and specifically, the doping element may be any one element selected from the group consisting of Ca, Sr, Ba, Ra, Be and Mg, and two or more doping elements may be included simultaneously.

Furthermore, the doping element included in the Zr site may be, but is not limited to, at least one element selected from the group consisting of Ta, Te, Nb, Sb, W, Mo, Cr, Y, V and Ti, and two or more doping elements may be included simultaneously.

The garnet-type oxide powder particles may be produced by any conventional method, and is not particular limited, and may be produced by a solid reaction method, a sol-gel method, or a coprecipitation method. For example, when the garnet-type oxide powder particles may be produced by the solid reaction method, raw material powder particles including the constituent elements of garnet-type oxides may be mixed, and the resulting mixed powder particle may be milled and then calcined to produce garnet-type oxide powder particles.

More specifically, the mixed powder particles of the raw materials may be obtained by mixing a lithium source such as lithium hydroxide or lithium carbonate, lanthanum oxide and zirconium oxide, and, if necessary, an oxide including a doping element, according to a stoichiometric ratio.

The lithium source may be added in excess, taking into account lithium loss during a subsequent sintering operation, and an amount of the lithium source may be selectively added as needed, and the present disclosure is not limited thereto, but the lithium source may be added in an amount that exceeds 10 wt% of the lithium source content to be added for a garnet-type oxide stoichiometric ratio, and may be added in a content of, for example, more than 10 wt% and less than or equal to 30 wt%, more than 10 wt% and less than or equal to 20 wt%, or more than 10 wt% and less than or equal to 15 wt%. Accordingly, the garnet-type oxide powder particles may include lithium in an amount of more than 10 at% of the stoichiometric ratio, for example, more than 10 at% and less than or equal to 30 at%, more than 10 at% and less than or equal to 20 at%, or more than 10 at% and less than or equal to 15 at%.

The method for preparing the garnet-type oxide powder particles may include an operation of grinding a mixture of raw materials. The grinding operation may control a shape of powder particles, a particle size, and distribution of each raw material included in the mixture of raw materials.

The grinding is not particularly limited, but may be performed by, for example, ball milling, and the ball milling may be performed by a dry or wet method. The ball milling may be performed, but is not limited to, at 100 to 300 rpm, or more specifically, 150 to 250 rpm, for 1 to 48 hours, more specifically, 5 to 30 hours.

The method may include an operation of calcining the mixture after the grinding. By means of the calcination, a desired crystal phase may be obtained and impurities may be removed. The calcination may be performed, but is not limited to, at a temperature range of 750 to 900°C for 3 to 12 hours. Thus, garnet-type oxide powder particles according to an embodiment of the present disclosure may be obtained.

The garnet-type oxide powder particles may have an average particle size of 1 $\mu$m or less and a multimodal particle size distribution, such as a bimodal particle size distribution. An average particle diameter and particle size distribution may be analyzed using a commonly used particle size analyzer, and for example, a particle size analyzer utilizing laser diffraction may be used. Specifically, laser diffraction-based particle size analyzers are not particularly limited, but, for example, a Malvern particle size analyzer or a Horiba particle size analyzer may be used.

A size of the garnet-type oxide powder particles may affect the densification of a sintered body. Accordingly, in order to obtain a sintered body having high lithium ion conductivity, a high-quality microstructure at grains and boundaries between the grains may be required. When the garnet-type oxide powder particles have a small particle size and two or more particle sizes, specifically a bimodal distribution, a high-density ceramic sheet may be obtained by sintering.

The size of the garnet-type oxide powder particles may affect the densification of the sintered body. Accordingly, in order to obtain a sintered body having high lithium ion conductivity, a high-quality microstructure at the grains and boundaries between the grains may be required. When the garnet-type oxide powder particles has a small particle size and a multimodal distribution, a high-density ceramic sheet may be obtained by sintering.

FIG. 1 is a schematic diagram illustrating an effect of particle size distribution characteristics on the densification of the sintered body. As may be seen from FIG. 1, when using powder particles having a monomodal particle size distribution (a), a relative density may be low due to a gap between particles, and when using powder particles having two or more particle sizes (b), gaps formed by first powder particles having a larger particle size may be filled with second powder particles having a smaller particle size, thereby increasing an apparent relative density of the sintered body.

For example, the garnet-type oxide powder particles may include first powder particles having a particle size ranging from 0.1 $\mu$m to 1 $\mu$m and second powder particles having a particle size ranging from 0.5 $\mu$m to 10 $\mu$m. Specifically, the first powder particles having a particle size ranging from 0.2 $\mu$m to less than 0.7 $\mu$m and the second powder particles having a particle size ranging from 0.7 $\mu$m to 3 $\mu$m may be included.

In this case, the first powder particles may account for 50% to 80% of a total powder volume, and the second powder particles may account for 20% to 50% of a total powder volume.

As another example, the garnet-type oxide powder particles may have a bimodal particle size distribution having a $Dv^{10}$ of 1 $\mu$m or less and a $Dv_{50}$ of 1 $\mu$m to 30 $\mu$m. More specifically, the $Dv_{10}$ may be 0.3 $\mu$m to 1 $\mu$m and the $Dv_{50}$ may be 1 $\mu$m to 10 $\mu$m or 1 $\mu$m to 5 $\mu$m.

As another embodiment, the garnet-type oxide powder particles may have a trimodal particle size distribution, as illustrated in (c) of FIG. 1. When the garnet-type oxide powder particles has a trimodal particle size distribution, a gap between the first and second powder particles may be filled more densely with third powder particles having a smaller particle size. Furthermore, the gap may be filled more densely with the third powder particles, thereby further increasing the apparent relative density of the sintered body.

The present disclosure is not limited thereto, and the garnet-type oxide powder particles may have a trimodal particle size distribution of first powder particles having a $Dv_{10}$ of less than 1 $\mu$m, second powder particles having a $Dv_{50}$ of 1 to 3 $\mu$m, and third powder particles having a $Dv_{90}$ of 1.5 to 30 $\mu$m, and more specifically, the garnet-type oxide powder particles may have a particle size distribution of first powder particles having a $Dv_{10}$ of 0.3 to 1 $\mu$m, second powder particles having a $Dv_{50}$ of 0.7 to 2.5 $\mu$m, and third powder particles having a $Dv_{90}$ of 1.5 to 20 $\mu$m, and also, the garnet-type oxide powder particles may have a particle size distribution of first powder particles having a $Dv_{10}$ of 0.4 to 0.6 $\mu$m, first powder particles having a $Dv_{50}$ of 0.7 to 2 $\mu$m, and first powder particles having a $Dv_{90}$ of 1.5 to 15 $\mu$m.

To ensure that the garnet-type oxide powder particles obtained by the calcination have a multimodal particle size distribution, such as a bimodal particle size distribution, an operation of grinding the garnet-type oxide powder particles after calcination may be included, if necessary, thereby providing garnet-type oxide powder particles having an average particle size of less than 1 $\mu$m.

The grinding process is not particularly limited, but may be performed using ball milling as described above. The ball milling may be performed using a dry or wet method, for example, at 100 to 300 rpm for 48 to 100 hours. Furthermore, balls used in the ball milling may have a diameter of 5 to 10 mm.

An operation of producing a garnet-type oxide-based molded body using the garnet-type oxide powder particles having a multimodal particle size distribution, such as the bimodal particle size distribution described above. The garnet-type oxide-based molded body is not particularly limited and may be, for example, in a sheet shape.

A specific thickness and size of the garnet-type oxide-based molded body may be adjusted depending on the characteristics of the sintered body to be produced and are not particularly limited, and for example, a thickness of the garnet-type oxide-based molded body may range from 100 to 1,000 $\mu$m.

An operation of sintering the produced garnet-type oxide-based molded body may be included. The sintering is an operation of producing a garnet-type oxide-based ceramic sheet by densifying the garnet-type oxide-based molded body, and the sintering may be performed using a two-operation sintering method including a first sintering operation and a second sintering operation.

Specifically, the two-operation sintering method may include a first sintering operation performed at a first sintering temperature and a second sintering operation performed at a second sintering temperature, and the first sintering temperature may be higher than the second sintering temperature.

More specifically, the first sintering operation is performed at a relatively high temperature during a sintering process of the second sintering operation, and specifically, the first sintering operation may be performed at a temperature ranging from 1050°C to 1400°C, for example, 1050°C or more and 1400°C or less.

When the first sintering temperature of the first sintering operation is significantly low, a sintered body having a high degree of sintering may not be obtained, and when the first sintering temperature is significantly high, excessive grain growth may occur during sintering.

The first sintering temperature may be specifically 1100°C or higher, more specifically 1150°C or higher, specifically 1350°C or lower, more specifically 1300°C or lower or 1250°C or lower. The first sintering operation may be performed within the temperature range described above, so that the sintered body may be densified without excessive grain growth. In this case, the present disclosure is not limited thereto, and the first sintering operation may be performed to achieve a density of about 90% or more, and the first sintering operation may be performed to have a relative density of 90% or more.

The first sintering operation may be performed for a short period of time. The sintering may be performed at a high temperature for a short period of time, thereby suppressing excessive grain growth of the garnet-type oxide-based ceramic sheet. Specifically, the first sintering operation may be performed for 10 seconds to 1 hour, and more specifically, for 1 minute or more, 3 minutes or more, 5 minutes or more, 7 minutes or more, or 10 minutes or more, and for 1 hour or less, 50 minutes or less, 40 minutes or less, or 30 minutes or less.

The second sintering operation is not particularly limited as long as the operation may be performed at a temperature lower than the first sintering temperature of the first sintering operation, and specifically, the second sintering temperature may be 1000 to 1300°C, for example, 1000°C or higher, 1050°C or higher, or 1100°C or higher, and 1300°C or lower, 1250°C or lower, 1200°C or lower, or 1150°C or lower.

A sintering temperature difference between the first and second sintering operations is not particularly limited, but may be, for example, 50 to 200°C, specifically, 50 to 150°C, and more specifically, 50 to 100°C. As the first sintering operation and the second sintering operation having a sintering temperature difference within the above-described range, thereby preventing excessive grain growth of the garnet-type oxide-based ceramic sheet.

The second sintering operation may be performed for a longer period of time than the first sintering operation.

Specifically, the second sintering operation may be performed for 10 minutes to 24 hours, more specifically, for 10 minutes or more, 15 minutes or more, 30 minutes or more, 1 hour or more, 1 hour and 30 minutes or more, 2 hours or more, 3 hours or more, or 4 hours or more, and for 24 hours or less, 20 hours or less, 18 hours or less, 15 hours or less, 12 hours or less, 10 hours or less, 8 hours or less, 6 hours or less, or 4 hours or less.

The second sintering operation is a process for maintaining sintering, and may suppress excessive grain growth by the first sintering operation, which is performed at a high temperature for a short period of time, and may promote densification of the sintered body by the second sintering operation, which is performed at a lower temperature for a longer period of time.

In this manner, by performing a two-operation sintering process in which the first sintering operation is performed at a relatively high temperature and the second sintering operation is performed at a relatively low temperature, more specifically, by performing a two-operation sintering process in which the first sintering operation is performed for a short period of time and the second sintering operation is performed for a long period of time, the sintered body may be produced to suppress particle growth within the sintered body due to the melting of particles during the sintering process, thereby preventing particle coarsening. Accordingly, a fine particle size within the ceramic sheet may be maintained while improving particle compaction, resulting in a ceramic sheet having a high relative density.

Furthermore, because the sintering process is not performed at a high temperature for a long period of time, a phenomenon in which lithium within the ceramic sheet moves to a surface and volatilizes may be suppressed. Accordingly, a ceramic sheet having a high lithium concentration on the surface and a low lithium concentration within the ceramic sheet may be obtained.

For example, when sintering is performed at high temperatures for a long period of time, liquid sintering occurs due to the melting of particles during the sintering process to lead to coarsening of crystals of the sintered body, as illustrated in FIG. 2, and during the sintering process, internal lithium may move to a surface and volatilize, thus reducing the lithium content, and also, lithium may float from the interior to the surface of the ceramic sheet, thus increasing the lithium content. When the ceramic sheet is exposed to air, as illustrated in (a) of FIG 2, the increased lithium on the surface of the ceramic sheet may readily react with moisture and carbon dioxide in the air, so that $Li_2CO_3$ may be generated on the surface of the ceramic sheet, as illustrated in (b) of FIG. 2. The generation of $Li_2CO_3$ may lead to a decrease in ionic conductivity.

However, in a ceramic sheet prepared through a two-operation sintering process, liquid sintering due to the melting of particles may be suppressed by sintering at high temperatures for a short period and then at low temperatures for a long period. Accordingly, as illustrated in FIG. 3, the coarsening of the crystals of the sintered body may be suppressed, and an increase in the lithium content on the surface of the sintered body may be prevented.

By utilizing oxide powder particles including an excess of lithium over the stoichiometric ratio, the sintered body produced through the two-operation sintering may maintain the fine size of the oxide particles, and furthermore, the sintered body may be densified by oxide powder particles having two or more particle sizes, specifically a bimodal particle size distribution. The maintenance and densification of the fine particle size may suppress lithium volatilization, and may inhibit the lithium in the oxide powder particles from reacting with moisture or carbon dioxide.

That is, even when the ceramic sheet is exposed to air, as illustrated in (a) of FIG. 3, the GLLZO in the ceramic sheet may be suppressed from reacting with moisture and carbon dioxide in the air, and accordingly, as illustrated in (b) of FIG. 3, the generation amount of impurities such as nonconductive $Li_2CO_3$ and $La_2Zr_2O_7$ on the ceramic sheet surface may be reduced. Hence, when a garnet-type oxide-based ceramic sheet is used as an electrolyte sheet for an all-solid battery, it may be possible to improve interfacial compatibility between an electrode and an electrolyte layer, which may contribute to maintaining the ionic conductivity of the ceramic sheet, reducing interfacial resistance, and mitigating dendrite growth.

According to another embodiment, the garnet-type oxide-based ceramic sheet may include a surface layer and a deep layer, and an average lithium content of the garnet-type oxide particles present in the surface layer may be higher than an average lithium content of the garnet-type oxide particles present in the deep layer. Here, the garnet-type oxide may be as described above.

The surface layer and the deep layer may be determined based on a point in which the lithium content differs by analyzing the lithium content according to thickness, and for example, the lithium content may be analyzed using secondary ion mass spectrometry (SIMS).

Alternatively, the surface layer and the deep layer may be distinguished based on a depth of 1 $\mu$m from a surface of the ceramic sheet in the thickness direction.

In this case, a 1/2 point may be set as a thickness center based on an average thickness of the garnet-type oxide-based ceramic sheet, and the surface may be set as 0 $\mu$m, and the thickness from the surface toward the thickness center may be measured.

A ratio of the average lithium content of the garnet-type oxide in the surface layer to the average lithium content of the garnet-type oxide in the deep layer may be greater than 1 and less than 1.014, specifically, greater than 1 and less than 1.01, or more than 1 and less than 1.009. A ceramic sheet having superior atmospheric stability and mechanical stability may be prepared by having an average lithium content ratio within the above-described range.

In the average lithium content of the garnet-type oxide in the surface layer, the stoichiometric ratio of lithium may be less than 6.33 based on when an oxygen content is 12 in a composition formula of garnet-type oxide particles, and specifically, the stoichiometric ratio may be 6.32 or less, 6.31 or less, or 6.30 or less. Additionally, the average lithium content of the garnet-type oxide in the surface layer may be 6.25 or more, 6.27 or more, or 6.28 or more. When the garnet-type oxide particles in the surface layer have an average lithium content within the above-described range, atmospheric stability may be enhanced. Specifically, the average lithium content refers to the X value when the compositional formula of the garnet-type oxide particles is $Li_xGa_{0.25}La_3Zr_2O_{12}$.

In the average lithium content of the garnet-type oxide in the deep layer, the stoichiometric ratio may be 6.30 or less based on when an oxygen content is 12 in a composition formula of garnet-type oxide particles, and specifically, the stoichiometric ratio may be 6.28 or less, 6.25 or less, 6.24 or less, or 6.23 or less. Additionally, the average lithium content of the garnet-type oxide in the deep layer may be 6.20 or more, 6.22 or more, or 6.23 or more.

The sintering process in the operation of sintering the produced garnet-type oxide-based molded body may be performed by a method selected from the group consisting of, but not limited to, spark plasma sintering, rapid thermal annealing, flash lamp sintering, and laser sintering.

The sintering in the operation of sintering the produced garnet-type oxide-based molded body may be performed by a method selected from the group consisting of, but not limited to, spark plasma sintering, rapid thermal annealing, flash lamp sintering, and laser sintering.

The garnet-type oxide-based ceramic sheet provided by the present disclosure, as described above, may suppress reaction with atmospheric moisture and/or carbon dioxide, thereby reducing the amount of an impurity phase formed on the surface of the garnet-type oxide-based ceramic sheet and exhibiting high ionic conductivity, specifically, exhibiting a high lithium ion conductivity of 1.3 mS/cm or more at 25°C.

Furthermore, the garnet-type oxide-based ceramic sheet of the present disclosure may exhibit an electronic conductivity of $10 \times 10^{-10}$ cm or less.

Furthermore, the garnet-type oxide-based ceramic sheet according to the present disclosure may be sintered at a relatively low temperature or for a short period of time, such as through light sintering, thereby suppressing excessive grain growth. For this reason, the garnet-type oxide-based ceramic sheet may have grain boundaries and an average grain size of 4 to 200 $\mu$m. More specifically, an average grain size may be 4 $\mu$m or more, 5 $\mu$m or more, or 6 $\mu$m or more, and 200 $\mu$m or less, 100 $\mu$m or less, 50 $\mu$m or less, 30 $\mu$m or less, or 10 $\mu$m or less. Atmospheric stability may be improved by having such a fine grain size. Furthermore, the garnet-type oxide-based ceramic sheet according to the present disclosure can prevent excessive grain growth, thereby enhancing mechanical strength.

An all-solid secondary battery including the garnet-type oxide-based ceramic sheet according to the present disclosure is provided. Specifically, the all-solid secondary battery may include an anode, a cathode, and a solid electrolyte, and the solid electrolyte may be a garnet-type oxide-based ceramic sheet provided in the present disclosure.

The cathode is not particularly limited, and may a lithium-transition metal oxide, such as lithium cobalt oxide ($LiCoO_2$), lithium manganese oxide ($LiMn_2O_4$), or lithium nickel oxide ($LiNiO_2$) or a lithium-transition metal composite oxide in which a portion of these transition metals is substituted with another transition metal may be included as a cathode active material.

For example, the lithium-transition metal oxide may include nickel (Ni) and may further include at least one selected from the group consisting of cobalt (Co) and manganese (Mn). For example, the cathode active material may include an NCM-based cathode active material; a Mn-rich cathode active material; or an LLO (Li-rich layered oxides, overlithiated oxides, overlithiated layered oxides, OLO, LLOs). For example, the lithium-transition metal oxide may be at least one selected from the group consisting of the following chemical formulas 2 to 4:

[Chemical Formula 2] $\quad Li_aNi_bM_{1-b}O_2$

M may include at least one selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr, and may include, specifically Co, Mn, or Al, more specifically, and may include Co and Mn as needed, and may further include Al optionally. Furthermore, in chemical formula 2 above, a may be 0.9 or more and 1.2 or less, and more specifically, 0.95 or more and 1.08 or less, and b may be 0.5 or more, and more specifically, 0.6 or more, 0.8 or more, 0.9 or more, or 0.98 or more.

[Chemical Formula 3] $\quad pLi_2MnO_3 \cdot (1-p)LiqJO_2$

In chemical formula 3 above, J may include one or more elements selected from the group consisting of Mn, Ni, Co, Fe, Cr, V, Cu, Zn, Ti, Al, Mg and B, and $0<p<1$ and $0.9 \leq q \leq 1.2$ may be satisfied.

[Chemical Formula 4] $\quad Li_{1+x}M_{1-x}O_2$

In chemical formula 4 above, $0 \leq x \leq 0.4$ may be satisfied and M is at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr. Specifically, in chemical formula 4 above, M may include Ni, Co, Mn or Al, and more specifically, may include Ni, Co, and Mn, and may further include Al optionally.

Furthermore, the cathode active material may be a lithium iron phosphate (LFP)-based cathode active material, typically represented by the chemical formula $LiFePO_4$.

Furthermore, the lithium-transition metal oxide may be a primary particle or a secondary particle. Specifically, the lithium-transition metal oxide may be in the form of a single particle, or may be a secondary particle formed by assembling or agglomerating a plurality of primary particles to form a single particle. Here, the single particle form denotes excluding, for example, a secondary particle substantially formed into a single particle by assembling or agglomerating more than 10 primary particles (e.g., more than 10), and may include the meaning in which particles in the range of 2 to 10 single particles are attached or closely adhered to each other to substantially have a form of single body (e.g., a structure transformed into a single particle). In some embodiments, the cathode active material may include both secondary particle and single particle forms.

The anode is not particularly limited, and may include a carbon-based active material such as artificial graphite or natural graphite; a silicon-based active material such as silicon oxide ($SiO_x$; $0<x<2$), a Si-C composite, or pure Si; or a metal such as lithium metal or a lithium-metal alloy.

Meanwhile, the all-solid lithium secondary battery may be a non-anode secondary battery. That is, the all-solid lithium secondary battery may be a battery including an anode that does not form an anode active material layer on an anode current collector during the battery assembly process, i.e., an anode comprised only of an anode current collector. When the non-anode lithium secondary battery is initially charged, a primary cathode active material and a sacrificial cathode active material may be delithiated, and lithium ions generated from the cathode active material may be reduced on the anode current collector to form a lithium metal layer or a lithium layer including a solid lithium layer.

A method for preparing the all-solid lithium secondary battery is not particularly limited, but the method may include coating a slurry including an anode or cathode active material on a current collector, followed by drying and rolling processes to produce an anode or cathode, respectively, and producing an all-solid lithium secondary battery in a manner of forming an oxide-based solid electrolyte sheet by performing a photo-sintering process with respect to an oxide-based thin film sheet formed by coating a slurry including oxide particles or the like on the anode or cathode and drying the slurry.

When the all-solid lithium secondary battery includes the oxide-based solid electrolyte sheet described above, the battery has no risk of ignition due to electrolyte leakage, and may exhibit excellent performance, such as high energy density.

Hereinafter, the present disclosure will be described in more detail with examples. However, the following examples illustrate specific embodiments and are not intended to limit the embodiments.

Mode for the Invention

**Reference Example 1**

**Preparation of GLLZO Powder Particles**

Pristine powder particles of $Li_2CO_3$ (Soekawa Chemicals, 99.9%), $La_2O_3$ (High Purity Chemicals, 99.9%), $ZrO_2$ (Samchun Chemicals, 99.9%), and $Ga_2O_3$ (High Purity Chemicals, 99.9%) were used as starting reagents and mixed in a stoichiometric ratio. $Li_2CO_3$ was weighed more than 10 wt% to compensate for Li loss during sintering.

The mixture was ball-milled at 150 rpm for 24 hours in a Nalgene bottle including isopropanol using a $ZrO_2$ ball as a grinding medium.

After removing the $ZrO_2$ ball, the slurry was dried in an oven at 80°C for 3 hours. The dried powder particles were then calcined in air at 850°C for 6 hours to produce Ga-doped $Li_{6.25}Ga_{0.25}La_3Zr_2O_{12}$ (GLLZO). The produced GLLZO powder particles was imaged by SEM and is illustrated in (a) of FIG. 4.

The calcined GLLZO powder particles was then ground by hand and ball milled in a Nalgene bottle including isopropanol at 150 rpm for 24 hours using $ZrO_2$ balls as a grinding medium to control a particle size. The obtained slurry was dried at 80°C for 6 hours and the powder particles were ground by hand for 10 minutes. The obtained GLLZO powder particles were imaged by the SEM and is illustrated in (b) of FIG. 4.

Furthermore, the particle size distribution of the controlled GLLZO powder particles was measured using a Malvern particle size analyzer, including $Dv_{10}$, $Dv_{50}$, and $Dv_{90}$, and the results are illustrated in (c) of FIG. 4.

Referring to (a) of FIG. 4, the calcined powder particles were particles having a spherical shape having a size of about 10 μm, but by the calcined powder particles were ball milled, so that the particle size could be adjusted to about 1 μm, as illustrated in (b) of FIG. 4. Furthermore, referring to (c) of FIG. 4, the particle size distribution of the GLLZO powder particles in which the particle size was adjusted to about 1 μm by ball milling, had a $Dv_{(10)}$ of 0.446 μm, a $Dv_{(50)}$ of 0.737 μm,

and a $D_{v90}$ of 2.52 $\mu$m, from which it may be confirmed that two or more types of particles having different sizes may be obtained.

**Preparation of Ceramic Sheet**

The obtained GLLZO powder particles were cold-pressed into pellets having a diameter of about 8 mm and a thickness of about 1 mm using a cold isotactic press at 200 MPa.

The cold-pressed pellets were sintered in air to prepare a ceramic sheet. In this case, a sintering condition included performing a first sintering at 1250°C for 10 minutes, followed by a second sintering at 1150°C for 180 minutes, so that the ceramic sheet was prepared.

The ceramic sheet was analyzed by XRD, and the Rietveld fitting results for the XRD data are illustrated in (a) of FIG. 5. Furthermore, the properties and fitting reliability function values for the prepared ceramic sheet were measured, and the results thereof are illustrated in Table 1 below.

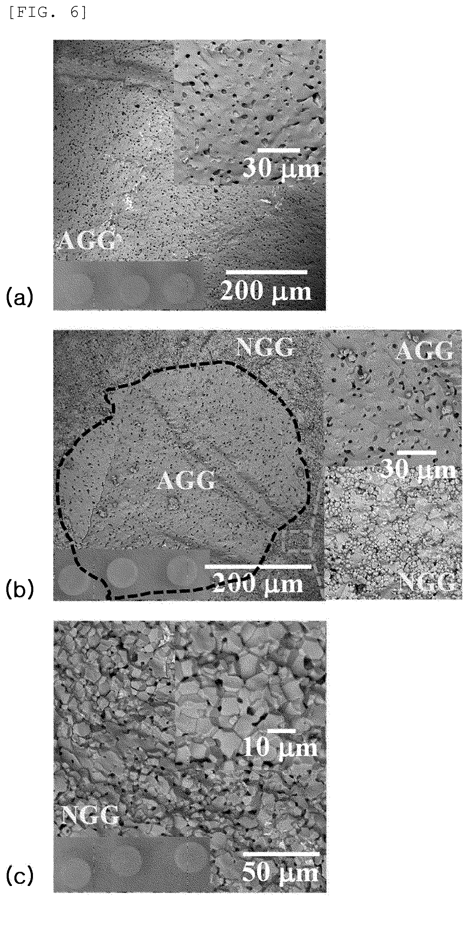

The prepared ceramic sheet was imaged using an SEM, and the image is illustrated in (a) of FIG. 6.

Meanwhile, the grain size and relative density of the prepared ceramic sheets were measured, and the results thereof are illustrated in Table 2. The grain size was measured using Image J on SEM images of the ceramic sheet, and the relative density was calculated by dividing the measured density of the sample by the theoretical density, and the measured density was obtained by measuring the mass and volume of the sample, and the theoretical density was obtained using the lattice constant of the XRD.

Furthermore, a two-probe AC impedance of the prepared ceramic sheet was measured, and a pattern thereof is illustrated in FIG. 7.

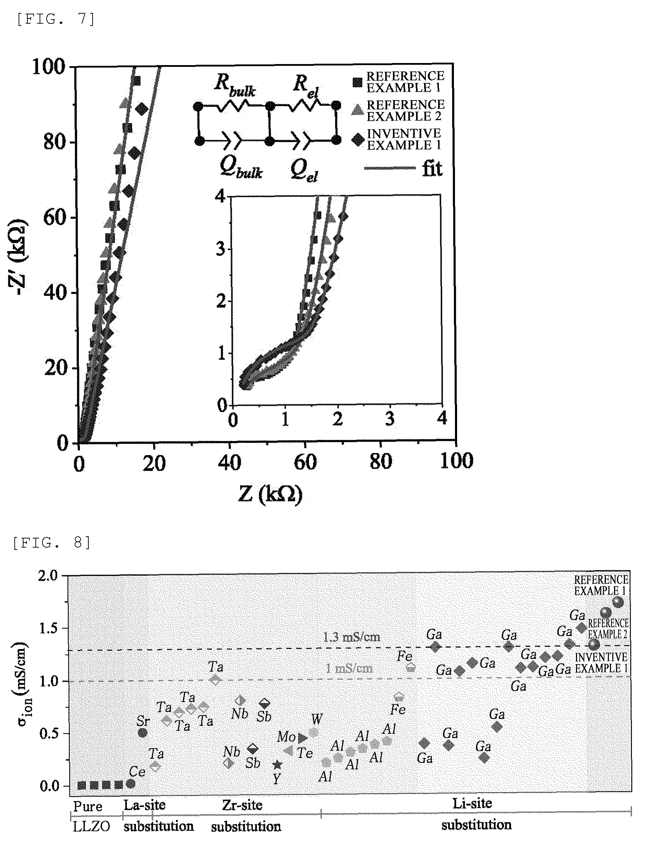

The ionic conductivity of the prepared ceramic sheets is also illustrated in FIG. 8. For comparison, FIG. 8 also illustrates a lithium ion conductivity value known for LLZO including a doping element.

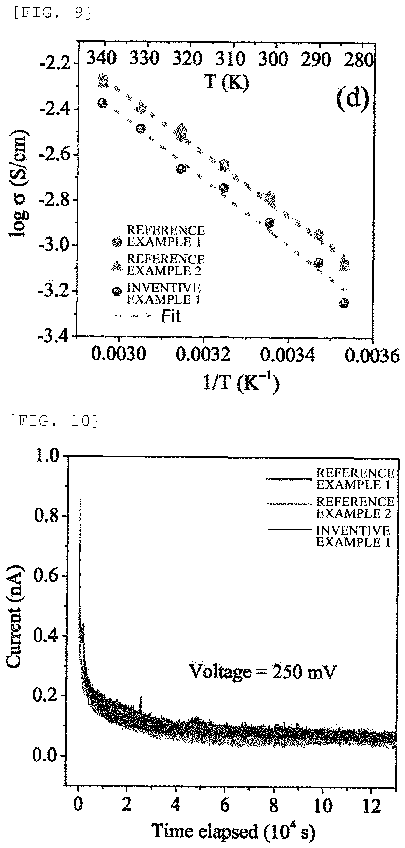

Furthermore, a temperature-dependent resistance of the ceramic sheet was measured, and a temperature-dependent ionic conductivity was analyzed, and the results thereof are illustrated in FIG 9.

Furthermore, a DC polarization test was performed on the prepared ceramic sheet, and the results thereof are illustrated in FIG. 10.

**Reference Example 2**

A ceramic sheet S2 was manufactured using the same method as in Reference Example 1, except that the first sintering temperature was 1200°C.

The prepared ceramic sheet was analyzed using the same method as in Reference Example 1, and the results thereof are illustrated in Tables 1 and 2, (b) of FIG. 5 and (b) of FIG. 6, and FIGS. 7 to 10, respectively.

**Inventive Example 1**

A ceramic sheet S3 was prepared using the same method as in Reference Example 1, except that the second sintering temperature was 1100°C.

The prepared ceramic sheet was analyzed using the same method as in Reference Example 1, and the results thereof are illustrated in Tables 1 and 2, (c) of FIG. 5 and (c) of FIG. 6, and FIGS. 7 to 10, respectively.

**Evaluation 1. Lithium Content Analysis of Ceramic Sheet**

An average lithium content in the deep layer (a region from a depth of more than 1 $\mu$m from a surface to a center of a thickness) of the ceramic sheet of Reference Examples 1 and 2, and Inventive Example 1 was analyzed using inductively coupled plasma (ICP) elemental analysis. The average lithium contents in the surface layer of the ceramic sheets of Reference Examples 1 and 2, and Inventive Example 1 were 6.43, 6.33, and 6.30, respectively. Here, the average lithium content is a stoichiometric ratio of lithium based on when an oxygen content is 12 in the compositional formula of the garnet-type oxide particles. Specifically, the compositional formula of the garnet-type oxide particles in Reference Examples 1 and 2, and Inventive Example 1 is $Li_xGa_{0.25}La_3Zr_2O_{12}$, and thus, the average lithium content represents an X value.

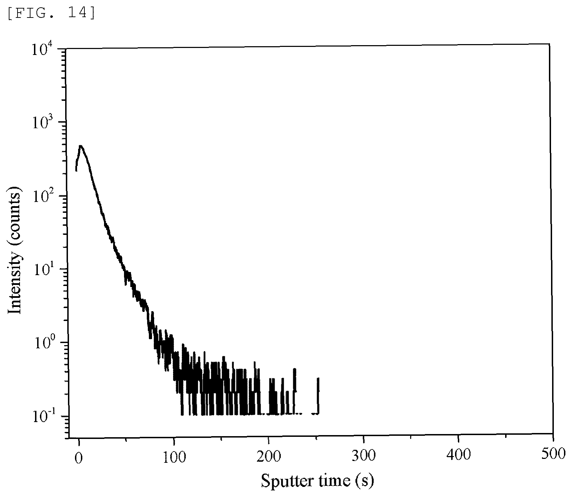

Furthermore, a lithium strength change according to the thickness of the ceramic sheet of Reference Examples 1 and 2, and Inventive Example 1 was analyzed using Secondary Ion Mass Spectrometry (SIMS), and an increase in a lithium content in the surface layer (the area from the surface to a thickness of 1 $\mu$m) as compared to the deep layer was calculated from the lithium content in the deep layer. The lithium content in the surface layer was analyzed. FIG. 14 illustrates the lithium content distribution from the surface layer to the deep layer of the ceramic sheet of Inventive Example 1.

The average lithium contents in the deep layers of the ceramic sheets of Reference Examples 1 and 2, and Inventive Example 1 were 6.23, 6.24, and 6.25, respectively. Here, the average lithium contents are the same as described above.

That is, the ceramic sheets of Reference Examples 1 and 2, and Inventive Example 1 all have a higher lithium content in the surface layer than in the deep layer, and a ratio of the average lithium content of the garnet-type oxide in the surface layer to an average lithium content of the garnet-type oxide in the deep layer is 1.008 for Inventive Example 1, while the ratios are 1.032 and 1.014 for Reference Examples 1 and 2, respectively, which may be confirmed to be 1.014 or higher.

## Evaluation 2. Crystal Structure and Grain Morphology

[Table 1]

| PROPERTIES | | REFERENCE EXAMPLE 1 | REFERENCE EXAMPLE 2 | REFERENCE EXAMPLE 3 |
|---|---|---|---|---|
| CRYSTAL STRUCTURE | | CUBIC | CUBIC | CUBIC |
| SPACE GROUP | | $\bar{I}43d$ | $\bar{I}43d$ | $\bar{I}43d$ |
| a(Å) | | 12.9716(1) | 12.9718(1) | 12.9753(1) |
| V(Å³) | | 2182.5(1) | 2182.7(1) | 2184.5(1) |
| Rwp(%) | | 10.3 | 11.8 | 9.86 |
| $R_p$(%) | | 7.42 | 8.55 | 7.05 |
| $R_{exp}$(%) | | 1.73 | 1.82 | 1.72 |
| Li1-01(Å)X4 | | 1.833(3) | 1.851(1) | 1.895(2) |
| $V_{Li1-0}$(Å³) | | 3.14(1) | 3.21(2) | 3.45(1) |
| Li1-Li3(Å) | | 2.069(1) | 2.070(1) | 2.072(1) |
| <Li3-0>(Å) | | 2.212(1) | 2.225(1) | 2.240(2) |
| $V_{Li3-0}$(Å³) | | 13.46 | 13.86 | 13.92 |

In Table 1 above, a represents a length of one side of a cubic (hexahedron) as a unit cell, and V represents the volume of the unit cell. Rwp, Rp and Rexp represent the reliability values of the fitting. The Rwp, Rp and Rexp values are about 10% or less, from which it may be confirmed that the fitting is sufficiently reliable. $Li_{1-O1}$(Å)X4 is a distance between lithium and oxygen atoms, $V_{Li1-O}$(Å3) is a volume, Li1-Li3(Å): a distance between lithium atoms, <Li3-O>(Å) is a distance between lithium and oxygen, and $V_{Li3-O}$(Å3) is a volume, and these values are reliability indices and respective reliability coefficients of the Rietveld refinement.

[Table 2]

| | | Reference Example 1 | Reference Example 2 | Inventive Example 1 |
|---|---|---|---|---|
| Grain Size (μm) | | 400μm or more | 200μm or more + about 4μm | about 6μm |
| Relative density (%) | | about 97 | about 96 | about 94 |
| Li content | Surface Layer | 6.43 | 6.33 | 6.30 |
| | Deep Layer | 6.23 | 6.23 | 6.25 |

Referring to Table 1 above, it was confirmed that the ceramic sheets of Reference Examples 1 and 2, and Inventive Example 1 had cubic crystals. Meanwhile, (a) to (c) of FIG. 5 illustrate the Rietveld fitting results for the XRD of the ceramic sheets obtained in Reference Examples 1 and 2, and Inventive Example 1, and Figure 5 (d) shows the XRD analysis results of the GLLZO ceramic sheet. Referring to (a) to (d) of FIG. 5, it may be confirmed that the Rietveld fitting results for the XRD of the ceramic sheets obtained in Reference Examples 1 and 2, and Inventive Example 1 are reliable. From this, it may be confirmed that the ceramic sheets prepared in Reference Examples 1 and 2, and Inventive Example 1 were all GLLZO.

FIG. 6 illustrates SEM images of the ceramic sheets of Reference Examples 1 and 2, and Inventive Example 1.

Referring to (a) of FIG. 6, the ceramic sheet of Reference Example 1 exhibited large grain sizes without distinct grain boundaries due to grain growth. Furthermore, referring to the results of analyzing the SEM images of the ceramic sheet in Table 2 using the Image J program, it may be confirmed that the prepared ceramic sheet had a grain size of 400 $\mu$m or more, and had tightly bonded grains, and a significantly high relative density of about 97%, thus providing a high-density microstructure. Furthermore, it may be confirmed that spherical pores partially exist on the surface, and is not intended to be bound by a specific theory, but the pores may be formed due to loss of some lithium during the sintering process.

Referring to (b) of FIG. 6, it may be confirmed that the ceramic sheet of Reference Example 2 exhibited the coexistence of normal grains (NGG) and coarse grains (AGG) due to partial grain growth. Furthermore, referring to Table 2, the ceramic sheet prepared in Reference Example 2 included coarse grains (AGG) having a grain size of 200 $\mu$m or more and normal grains (NGG) having a grain size of about 4 $\mu$m, and a relative density of about 96% was provided to have a high-density microstructure. However, no spherical pores were observed on the surface.

Referring to (C) of FIG. 6 and Table 2, it may be confirmed that the ceramic sheet of Example 1 in which a ratio of the average lithium content of the garnet-type oxide of the surface layer to the average lithium content of the garnet-type oxide of the deep layer was greater than 1 and less than 1.014, and that the ceramic sheet of Inventive Example 1 in which the lithium content of the surface layer was less than 6.33 was observed throughout the ceramic sheet in a manner in which normal grains having a grain size of about 6 $\mu$m has a transgranular morphology, without the formation of coarse grains (AGG) due to grain growth.

Meanwhile, referring to Table 2, it may be confirmed the ceramic sheet of the Reference Example exhibited an excellent relative density of about 94% and no spherical pores were observed on a surface thereof, thus providing a high-density microstructure.

## Evaluation 3. Ionic Conductivity

FIG. 7 illustrates electrochemical impedance spectroscopy (EIS) measurements performed to investigate the effect of microstructure on lithium ion conductivity of the ceramic sheets prepared in Reference Examples 1 and 2, and Inventive Example 1, and shows the impedance spectra at 25°C and the enlarged high-frequency region for each ceramic sheet.

The spectra illustrated in FIG. 7 exhibit a partially depressed semicircle at high frequencies and a strong increase in imaginary impedance at low frequencies, which may be due to Li$^+$ blocking at the electrode-electrolyte interface (electrode). The high-frequency portion is related to the total impedance of the pellet, i.e., the bulk contribution. The resistance (R) and capacitance (C) of the bulk resistance ($R_{bulk}$) and electrode resistance ($R_{el}$) were estimated by fitting the impedance spectrum using the corresponding equivalent circuit based on the Bricklayer model.

Two parallel RQ circuits connected in series were used to fit the impedance data illustrated in FIG. 7, where Q represents a constant phase factor $C = (R^{1-n}Q)^{1/n}$, where n is a fitting parameter.

The fitting clearly demonstrated the bulk transport process in all samples, and therefore, the total lithium ion conductivity ($\sigma^{total}$) may be estimated using the following equation for $R_{bulk}$.

$$\sigma_{total} = \frac{t}{R_{bulk}A}$$

where t and A are a thickness and an area of the ceramic sheet, respectively.

The lithium ion conductivities of the ceramic sheets prepared in Reference Example 1, Reference Example 2, and Inventive Example 1 are illustrated in FIG. 8, along with known lithium ion conductivity values for LLZO including doping elements. Referring to FIG. 8, the ionic conductivities of the ceramic sheets prepared in Reference Example 1, Reference Example 2, and Inventive Example 1 were ~1.7, ~1.6, and ~1.3 mS/cm, respectively, at 25°C, which demonstrates excellent performance.

The temperature-dependent resistance of the ceramic sheets prepared in Reference Example 1, Reference Example 2, and Inventive Example 1 was measured, and the temperature-dependent ionic conductivity was analyzed, and an Arrhenius plot is illustrated in FIG. 9. The activation energy ($E_a$) was extracted from the Arrhenius plot in FIG. 9 using the following equation.

$$\sigma_{total} = \sigma_O e^{\frac{E_a}{K_B T}},$$

where $\sigma_O$ and $K_B$ are the pre-exponential constant and the Boltzmann constant, respectively.

The $\sigma_{total}$ values obtained for the ceramic sheets of Reference Example 1, Reference Example 2, and Inventive Example 1 were ~0.27, ~0.28, and ~0.29 eV, respectively, from which a consistent trend with the ionic conductivity may be confirmed.

Furthermore, to quantify the contribution of electronic conductivity ($\sigma_{elec}$) to lithium ion conductivity for the ceramic sheets of Reference Example 1, Reference Example 2, and Inventive Example 1, DC polarization tests were performed, and the results thereof are illustrated in FIG. 10. FIG. 10 illustrates current-time plots at 250 mV DC polarization at 25°C, but the current initially decreased over time but gradually reached a steady state (~14 to 60 pA) for all ceramic sheets.

**Evaluation 4. Surface Evaluation after Air Exposure**

Three ceramic sheets of Reference Example 1, Acupuncture Example 2, and Example 1 were prepared respectively. Each of the ceramic sheets (a) prepared above, the ceramic sheets (b) stored in a vacuum desiccator at 25°C for 9 months, and the ceramic sheets (c) left in air for 2 weeks (c) were prepared, respectively.

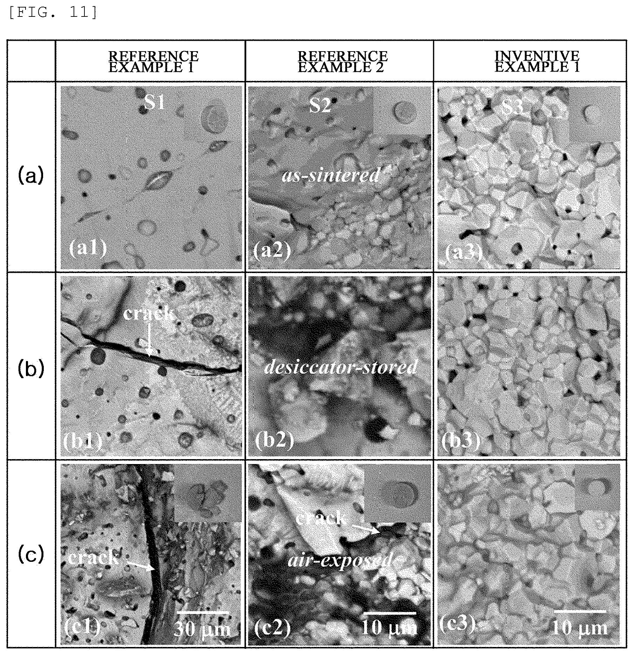

Surface conditions of each of the three ceramic sheets from each of Reference Example 1, Reference Example 2, and Inventive Example 1 were observed using a scanning electron microscope (SEM) to evaluate the formation of $Li_2CO_3$, and the SEM images obtained from the SEM observations are illustrated in FIG. 11.

Referring to FIG. 11, as illustrated in the ceramic sheet (b) after storage in a desiccator and the ceramic sheet (c) after exposure to air in Reference Example 1, cracks occurred along grain boundaries on the sintered body surface. Similar cracks also occurred in the ceramic sheets (b) and (c) of Reference Example 2. However, no cracks or breakage were observed in the ceramic sheet (b) after storage in the desiccator and in the ceramic sheet (c) after exposure to air in Inventive Example 1.

Furthermore, the surface color of the ceramic sheets (b) and (c) of Reference Examples 1 and 2 changed from white to black. While not intended to be bound by any particular theory, it is speculated that a mossy reaction layer is formed on the surface of the ceramic sheets (b) and (c) due to a reaction with carbon dioxide. The mossy reaction layer may indicate the formation of a secondary phase on the surface of the sintered body during storage in air and in the desiccator, and the ceramic sheets of Reference Examples 1 and 2 may have spontaneously fractured, resulting in a decrease in lithium ion conductivity.

However, referring to FIG. 11, the ceramic sheet of Example 1, which had smaller crystal grains, showed no surface damage, and no signs of deterioration or formation of impurities, such as surface color changes appeared. Accordingly, it was confirmed that the structure was maintained stably without the occurrence of cracks.

In summary, the ceramic sheet of Inventive Example 1 was confirmed to be resistant to cracking even with high exposure to air or long exposure times. While not intended to be bound by a specific theory, the cracks may be generated by applying stress to a specimen when a nonconductor phase, $Li_2CO_3$, is formed, and ultimately, the generated cracks propagate along defects (grain boundaries, voids, etc.) in the specimen, potentially leading to complete failure of the sample after a certain period of time. However, since the ceramic sheet of Inventive Example 1 is resistant to cracking, the formation of the nonconductor phase may be minimal, and the lithium reaction with moisture or carbon dioxide on the surface may be minimal.

**Evaluation 5. Electrical Characteristics Evaluation Following Air Exposure**

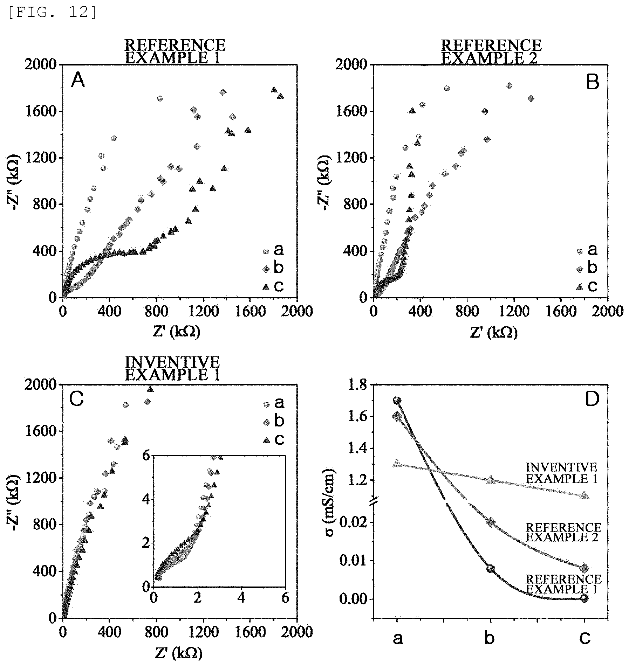

Electrochemical impedance analysis was performed on three types of ceramic sheets from each of Reference Examples 1 and 2, and Inventive Example 1 using a potentiostat (VMP-300, BioLogic (France)), and the resistance component was measured and the ionic conductivity ($\sigma_{total}$) was calculated. The complex impedance spectrum and changes in lithium ion conductivity were measured at 25°C, and the results thereof are illustrated in FIG. 12. Nyquist plots of the measured complex impedance spectrum and changes in lithium ion conductivity for the three types of ceramic sheets from each of Reference Examples 1 and 2, and Inventive Example 1 are illustrated in FIGS. 12A to 12C.

Specifically, FIG. 12A represents the ceramic sheet of Reference Example 1, B represents the ceramic sheet of Reference Example 2, C represents the ceramic sheet of Example 1, and shows the composite impedance spectra for the ceramic sheets in the states (a), (b), and (c) described above, respectively. Meanwhile, D of FIG. 12 illustrates the change in lithium ion conductivity according to the ceramic sheets in states (a), (b), and (c) for each ceramic sheet of Reference Example 1, Reference Example 2 and Inventive Example 1, and shows the results thereof.

Referring to FIGS. 12A and 12B, as compared to the ceramic sheet (a) of Reference Examples 1 and 2, the total impedance of the ceramic sheet (b) after desiccator storage and the ceramic sheet (c) after air exposure increased. However, it may be confirmed that the ceramic sheet (b) and the ceramic sheet (c) of Inventive Example 1 have impedance values that are not significantly different from the impedance value of the ceramic sheet (a).

Meanwhile, the lithium ion conductivity illustrated in D of FIG. 12 was determined by fitting the corresponding impedance spectrum to an equivalent RC circuit, and it may be confirmed that a $\sigma_{total}$ value significantly decreased in the ceramic sheet (b) after desiccator storage and the ceramic sheet (c) after air exposure as compared to the ceramic sheet (a) of each of Reference Examples 1 and 2. Specifically, the ceramic sheet (c) directly exposed to air showed a more rapid decrease in conductivity than the ceramic sheet (b) aged in a desiccator.

Specifically, for the ceramic sheet of Reference Example 1, the ceramic sheet (c) aged in air showed a decrease in $\sigma_{total}$ about four times (0.0002 mS/cm) as compared to the ceramic sheet (a), while the ceramic sheet (b) aged in a desiccator showed a decrease in $\sigma_{total}$ about three times (0.0079 mS/cm). Meanwhile, for the ceramic sheet of Reference Example 2, the decrease in $\sigma_{total}$ of the ceramic sheet (c) aged in air was about three times, and the decrease in $\sigma_{total}$ of the ceramic sheet (b) aged in a desiccator was about two times.

However, for the ceramic sheet of Inventive Example 1, the ionic conductivity of the ceramic sheet (c) aged in air was 1.1 mS/cm, and the ionic conductivity of the ceramic sheet (b) aged in a desiccator was 1.2 mS/cm, from which no significant difference from the ionic conductivity of the ceramic sheet (a) may be found. Accordingly, it may be confirmed that the ceramic sheet of Inventive Example 1 having the NGG microstructure exhibits superior air stability as compared to the ceramic sheets of Reference Examples 1 and 2 including the AGG.

Furthermore, while not intended to be bound by a specific theory, the ceramic sheets of Reference Examples 1 and 2 including larger sintered grains may have lower fracture strength and may be more easily fractured when exposed to air, but the ceramic sheet of Inventive Example 1 having smaller grains may have higher fracture strength even when exposed to air due to tightly bonded grain boundaries. Furthermore, the hardness of Al-doped LLZO ceramic sheets decreases with increasing grain size, and ceramic sheets having coarse grains may have lower mechanical strength than ceramic sheets having fine grains.

## Evaluation 6. Surface Li$_2$CO$_3$ Content Evaluation

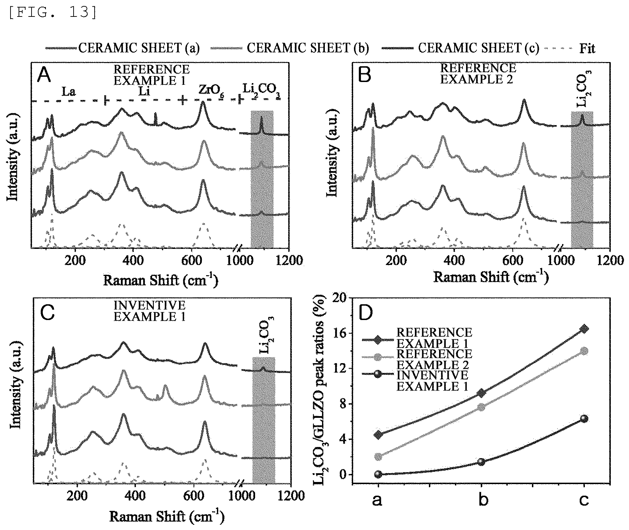

FIG. 13 shows that the ceramic sheets (a) to (c) prepared in Reference Examples 1 and 2, and Inventive Example 1 were subjected to Raman analysis using a NANOBASE Raman Microscopy system over a frequency range of 200 to 1200 cm$^{-1}$, and the Raman analysis results are illustrated in A to C, and the changes in the peak intensity ratio of Li$_2$CO$_3$/LLZO for each ceramic sheet are illustrated.

As illustrated in FIG. 13, the Li$_2$CO$_3$/LLZO peak ratios for the ceramic sheets (a) of Reference Examples 1 and 2 were about 4.5% and 2%, respectively. Meanwhile, no peak corresponding to Li$_2$CO$_3$ was detected in the ceramic sheet (a) of Inventive Example 1. These results indicate that a large amount of Li$_2$CO$_3$ was formed on the surface of the sintered body having larger crystal grains.

Furthermore, the Li$_2$CO$_3$/LLZO peak intensity ratio gradually increased in the order of ceramic sheet (b) and ceramic sheet (c) in all cases of Reference Examples 1 and 2, and Inventive Example 1. However, the Li$_2$CO$_3$/LLZO peak intensity ratio was significantly lower in the ceramic sheet of Inventive Example 1 as compared to Reference Examples 1 and 2. Accordingly, in the ceramic sheets (b) and (c) of Reference Examples 1 and 2, which included an AGG structure, Li$_2$CO$_3$ grew abnormally on the entire or partial surface, whereas in the ceramic sheets (b) and (c) of Inventive Example 1, which included an NGG microstructure, less Li$_2$CO$_3$ was formed, and the amount thereof formed also decreased over time.

In other words, the formation of Li$_2$CO$_3$ on the surface of a ceramic sheet may reduce lithium ion conductivity, and the phenomenon is more likely to occur in ceramic sheets including coarse-grained crystals with weak mechanical strength. Accordingly, as compared to the ceramic sheets of Reference Examples 1 and 2, the ceramic sheet of Inventive Example 1 may have less Li$_2$CO$_3$ phase formed on the surface, thereby exhibiting superior air stability.

## Claims

1. A garnet-type oxide-based ceramic sheet comprising a garnet-type oxide,

    wherein the garnet-type oxide-based ceramic sheet includes a surface layer and a deep layer,
    an average lithium content of garnet-type oxide particles in the surface layer is greater than an average lithium content of garnet-type oxide particles in the deep layer, and
    a ratio of the average lithium content of the garnet-type oxide particles in the surface layer to the average lithium content of the garnet-type oxide particles in the deep layer is greater than 1 and less than 1.014.

2. The garnet-type oxide-based ceramic sheet comprising a garnet-type oxide of claim 1, wherein the surface layer is a region from one surface of the ceramic sheet to a thickness of 1 $\mu$m, and the deep layer is a region from the thickness of 1 $\mu$m to a thickness center.

3. The garnet-type oxide-based ceramic sheet comprising a garnet-type oxide of claim 1, wherein in the average lithium content of the garnet-type oxide of the surface layer, a stoichiometric ratio of lithium is less than 6.33, based on when oxygen content is 12 in a compositional formula of the garnet-type oxide particles.

4. The garnet-type oxide-based ceramic sheet comprising a garnet-type oxide of claim 1, wherein the garnet-type oxide includes an LLZO-based oxide.

5. The garnet-type oxide-based ceramic sheet comprising a garnet-type oxide of claim 4, wherein the LLZO-based oxide includes a doping element.

6. The garnet-type oxide-based ceramic sheet comprising a garnet-type oxide of claim 5, wherein the LLZO-based oxide includes at least one doping element selected from the group consisting of Ga and Al at an Li site.

7. The garnet-type oxide-based ceramic sheet comprising a garnet-type oxide of claim 1, wherein the ceramic sheet has a lithium ion conductivity of 1.3 mS/cm or more at 25°C.

8. The garnet-type oxide-based ceramic sheet comprising a garnet-type oxide of claim 1, wherein the ceramic sheet has an electronic conductivity of $10 \times 10^{-10}$ cm or less.

9. The garnet-type oxide-based ceramic sheet comprising a garnet-type oxide of claim 1, wherein the ceramic sheet has grain boundaries and an average grain size of 4 to 200 $\mu$m.

10. A method for preparing a garnet-type oxide-based ceramic sheet, the method comprising:

preparing an oxide molded body by molding garnet-type oxide powder particles having an average particle size of 1 $\mu$m or less and two or more particle sizes into a predetermined shape; and
producing a sintered body by sintering the oxide molded body,
wherein the sintering includes a first sintering and a second sintering, and a first sintering temperature is higher than a second sintering temperature.

11. The method for preparing a garnet-type oxide-based ceramic sheet of claim 10, wherein the first sintering temperature is 1050 to 1400°C, and the second sintering temperature is 1000 to 1300°C.

12. The method for preparing a garnet-type oxide-based ceramic sheet of claim 10, further comprising:

preparing a calcined garnet-type oxide powder particles by calcining precursor powder particles; and
pulverizing the calcined garnet-type oxide powder particles to provide garnet-type oxide powder particles having two or more particle sizes.

13. The method for preparing a garnet-type oxide-based ceramic sheet of claim 12, the calcined garnet-type oxide powder particles have a $D_{10}$ of 1 $\mu$m or less and a $D_{50}$ of 1 $\mu$m to 30 $\mu$m.

14. The method for preparing a garnet-type oxide-based ceramic sheet of one of claims 10 to 13, the garnet-type oxide includes an LLZO-based oxide.

15. An all-solid secondary battery comprising an anode, a cathode, and a solid electrolyte,
Wherein the solid electrolyte is the ceramic sheet of one of claims 1 to 9.

[FIG. 1]

(a)

(b)

(c)

[FIG. 2]

( i )                    ( ii )

[FIG. 3]

(ⅰ)                    (ⅱ)

$H_2O$      $CO_2$

(a)

$H_2O$      $CO_2$

(b)

[FIG. 4]

(a)

(b)

(c)

[FIG. 5]

[FIG. 6]

(a)

(b)

(c)

[FIG. 7]

[FIG. 8]

[FIG. 9]

[FIG. 10]

[FIG. 11]

[FIG. 12]

[FIG. 13]

[FIG. 14]

## INTERNATIONAL SEARCH REPORT

| International application No. |
|---|
| **PCT/KR2024/006047** |

**A. CLASSIFICATION OF SUBJECT MATTER**

**C04B 35/48**(2006.01)i; **C04B 35/64**(2006.01)i; **C04B 35/626**(2006.01)i; **H01M 10/0562**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

C04B 35/48(2006.01); C04B 35/50(2006.01); H01B 1/06(2006.01); H01B 1/08(2006.01); H01M 10/052(2010.01); H01M 10/056(2010.01); H01M 10/0562(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체(all solid), 리튬 란타늄 지르코늄 산화물(LLZO), 가넷(garnet), 소결(sintering), 바이모달(bimodal)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-140963 A (TDK CORP.) 03 September 2020 (2020-09-03) See claims 1-8; paragraph [0088]; and table 1 (examples 1-6). | 10-14 |
| A | | 1-9,15 |
| Y | KR 10-2022-0058453 A (SCHOTT AG) 09 May 2022 (2022-05-09) See claims 1-9, 13 and 14; and paragraphs [0087]-[0090]. | 10-14 |
| A | KR 10-2200967 B1 (KOREA INSTITUTE OF INDUSTRIAL TECHNOLOGY) 11 January 2021 (2021-01-11) See entire document. | 1-15 |
| A | CN 113880577 B (SHANGHAI JIAO TONG UNIVERSITY et al.) 17 March 2023 (2023-03-17) See entire document. | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 August 2024** | **16 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/006047** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0028165 A (SAMSUNG ELECTRONICS CO., LTD. et al.) 16 March 2020 (2020-03-16)<br>See entire document. | 1-15 |

Form PCT/ISA/210 (second sheet) (July 2022)

**INTERNATIONAL SEARCH REPORT**
Information on patent family members

International application No.

**PCT/KR2024/006047**

| Patent document cited in search report | | | Publication date (day/month/year) | Patent family member(s) | | | Publication date (day/month/year) |
|---|---|---|---|---|---|---|---|
| JP | 2020-140963 | A | 03 September 2020 | None | | | |
| KR | 10-2022-0058453 | A | 09 May 2022 | CN | 114447419 | A | 06 May 2022 |
| | | | | EP | 3993122 | A1 | 04 May 2022 |
| | | | | JP | 2022-074121 | A | 17 May 2022 |
| | | | | US | 2022-0140387 | A1 | 05 May 2022 |
| KR | 10-2200967 | B1 | 11 January 2021 | KR | 10-2020-0086081 | A | 16 July 2020 |
| CN | 113880577 | B | 17 March 2023 | CN | 113880577 | A | 04 January 2022 |
| KR | 10-2020-0028165 | A | 16 March 2020 | CN | 110880616 | A | 13 March 2020 |
| | | | | EP | 3621130 | A1 | 11 March 2020 |
| | | | | KR | 10-2024-0023582 | A | 22 February 2024 |
| | | | | US | 11038199 | B2 | 15 June 2021 |
| | | | | US | 11949065 | B2 | 02 April 2024 |
| | | | | US | 2020-0083562 | A1 | 12 March 2020 |
| | | | | US | 2021-0242495 | A1 | 05 August 2021 |

Form PCT/ISA/210 (patent family annex) (July 2022)